# EUROPÄISCHE PATENTSCHRIFT

(11) **EP 2 376 731 B1**
(45) Veröffentlichungstag und Bekanntmachung des Hinweises auf die Patenterteilung: **28.11.2012**
(21) Anmeldenummer: 10700227.1
(22) Anmeldetag: 08.01.2010
(51) Int. Cl.: A47B 96/20, A47B 95/00, F16B 12/00, E05D 1/02, E05D 9/00

(54) **BESCHLAG, MÖBELTEIL, MÖBEL UND VERFAHREN ZUR HERSTELLUNG EINER PLATTE**
FITTING FURNITURE PART PIECE OF FURNITURE AND METHOD FOR PRODUCING A PLATE
FERRURE, ÉLÉMENT DE MEUBLE, MEUBLE ET PROCÉDÉ DE FABRICATION D'UN PANNEAU

(30) Priorität: 09.01.2009 DE 102009003334; 09.01.2009 DE 102009003335
(43) Veröffentlichungstag der Anmeldung: 19.10.2011
(73) Patentinhaber: Hettich-Heinze GmbH & Co. KG, 32139 Spenge (DE)
(72) Erfinder: ANDSCHUS, Stefan, 32312 Lübbecke (DE); SCHRUBKE, Lars, 32278 Kirchlengern (DE)
(74) Vertreter: Dantz, Jan Henning
(86) Internationale Anmeldenummer: PCT/EP2010/050127
(87) Internationale Veröffentlichungsnummer: WO 2010/079203

(56) Entgegenhaltungen:
- EP-A2- 0 292 628
- DE-A1- 3 223 569
- DE-A1- 4 334 245
- DE-C1- 19 544 653
- DE-U1- 20 319 267
- DE-U1-202004 015 471

## Beschreibung

Die Erfindung betrifft einen Beschlag für Möbel, ein Möbelteil und ein Möbel.

Seit langem werden Beschläge aus Kunststoff im Möbelbau eingesetzt. Sie haben den Vorteil der individuellen Formbarkeit, effektiven Herstellbarkeit und einer Leichtigkeit gegenüber vergleichbaren Stahlbeschlägen. Trotz vieler Vorteile dieser Kunststoffbeschläge stellt jedoch die ökologische Abfallentsorgung solcher, meist auf fossilen Rohstoffen basierender Kunststoffbeschläge ein Problem dar, sie weisen meist eine schlechte Kompostierbarkeit auf. Des weiteren führen fossile Rohstoffe zu einer schlechten CO₂ -Bilanz für aus diesen Rohstoffen hergestellte Beschläge und Möbel.

Desweiteren werden seit langem Verbundmaterialien, insbesondere Leichtbauplatten, im Möbelbau eingesetzt. Sie haben den Vorteil der individuellen Formbarkeit und einer Leichtigkeit gegenüber vergleichbaren Massivmöbelteilen. Trotz vieler anwendungsfreundlicher Vorteile von Verbundstoffen in Möbelteilen stellt jedoch die ökologische Abfallentsorgung solcher Möbelteile ein Problem dar. Einzelbestandteile wie Dekorfolien oder Klebstoff werden auf Basis von fossilen Rohstoffen gebildet und sind überwiegend schlecht kompostierbar. Eine alternative Möbelbeseitigung, beispielsweise in Müllverbrennungsanlagen wirkt sich aufgrund der Verwendung von fossilen Rohstoffen negativ auf die CO2 Bilanz der Entsorgung aus.

Bekannte Lösungen auf dem Bereich der Möbel und Leichtbauanwendungen sind Schranksysteme mit Möbelteilen auf Kartonbasis, wobei jedoch ein biologischer Abbau der Klebstoffe oder von Dekorfolien, zum Schutz vor Verformung durch Feuchtigkeitsaufnahme, häufig nicht berücksichtigt ist.

Die DE 100 44 665 beschreibt Beschläge wie Schrauben oder Stifte aus Holz, welche zudem biologisch abbaubar sind. Aufgrund seiner faserartigen Struktur ist dieser Werkstoff nicht an allen Stellen gleichmäßig belastbar und zudem in der Formgebung begrenzt. Insbesondere lassen sich dünne Bauteile nur schlecht aus Holzwerkstoffen fertigen. Zudem werden Holzstifte zur besseren Fixierung oftmals zusätzlich mit Leim bestrichen, welcher nicht vollständig biologisch abbaubar ist.

Die DE 200 19 949 U1 offenbart ein aus einem Biopolymer hergestelltes Verbindungselement, insbesondere auf Ligninbasis, welches beispielsweise als Dübel oder in Form einer Feder ausgebildet sein kann. Lignin eignet sich aufgrund seiner Eigenschaften zur Herstellung von eher breitflächigen Formkörpern. Für in vielen Beschlagsvarianten benötigten Verbindungselementen mit feingliedrigem Aufbau mit punktuellen Kraftbelastungen ist der Einsatz von Ligninmaterialien bislang unbekannt.

Die DE 20 2007 015 604 U1 offenbart einen Verbindungsbeschlag für Leichtbauplatten mit einem ersten Gehäuseteil und einem zweiten Gehäuseteil, die jeweils in zwei Leichtbauplatten festgelegt sind, wobei die beiden Gehäuseteile durch eine Klammer miteinander fixiert werden. Diese konstruktive Lösung hat sich für die Positionierung und als Verstellmöglichkeit für sehr günstig erwiesen. Allerdings müssen die beiden Kunststoff-Gehäuseteile am Ende der Lebensdauer eines Möbels bei dessen Kompostierung aus den Leichtbauplatten entfernt werden, was einen zusätzlichen Aufwand darstellt.

Aufgabe der Erfindung ist es daher, ausgehend von bisherigen Lösungen, ein Möbel zu schaffen, welches umweltverträglich ausgebildet ist und eine gute Ökobilanz aufweist. Zur Herstellung eines derartigen Möbels besteht eine weitere Aufgabe der Erfindung darin, Beschläge sowie Möbelteile zu schaffen, die ebenfalls diesen Anforderungen genügen.

Die gestellte Aufgabe wird durch einen Beschlag für ein Möbel mit den Merkmalen des Anspruches 1 gelöst.

Erfindungsgemäß umfasst der Beschlag zumindest ein Formteil aus einem biologisch abbaubaren Kunststoff.

Dabei setzt sich ein biologisch abbaubarer Kunststoff aus natürlichen oder synthetischen Bausteinen zusammen, welche biologischen Reaktionen zugänglich sind.

Ein Möbelteil, insbesondere für den Leichtbau, weist ein Kernmaterial, mindestens ein Schichtmaterial, welches mit dem Kernmaterial durch einen Klebstoff verbunden ist auf. Das Kernmaterial ist dabei in seinen chemischen und / oder physikalischen Eigenschaften vom Schichtmaterial verschieden. Das Möbelteil ist aus derartigen Materialien gefertigt, dass das Möbelteil gemäß der DIN V 54900 vollständig biologisch abbaubar.

Nach DIN V 54 900 sind alle Materialien als biologisch abbaubar einzustufen, welche durch Vorgänge mit biologischer Aktivität unter Veränderung der chemischen Struktur des jeweiligen Stoffes zu natürlich vorkommenden Stoffwechselendprodukten umgewandelt werden. Dies ist nach der Norm dann erreicht, wenn mindestens 60% des organischen Kohlenstoffs der jeweiligen Materialkomponenten eines Produktes (mit einem Massenanteil aller organischen Komponenten größer als 50%) in maximal 6 Monaten abgebaut werden. Die Bedingungen und Abbaugeschwindigkeiten werden durch Standardtests ermittelt.

Vorzugsweise sind die Formteile nach der DIN EN 13432 2000 und deren Berichtigung als DIN EN 13432 2007 für eine aerobe Kompostierung geeignet, so dass Kunststoff nach einer Kompostierung von höchstens 12 Wochen Dauer in einer <2mm Siebfraktion maximal 10% der ursprünglichen Trockenmasse des Prüfmaterials gefunden werden darf.

Ein erfindungsgemäßer Beschlag, welcher ganz oder teilweise aus einem biologisch abbaubaren Kunststoff hergestellt ist, kann daher nach Ablauf des Möbellebenszyklus zusammen mit den restlichen Bestandteilen des Möbels zerkleinert und kompostiert werden. Dies hat insbesondere Vorteile im Bereich von Trendmöbeln oder Ausstellungsständen, welche nach dem Gebrauch umweltfreundlich entsorgt werden können.

Dadurch können Möbelteile wie Mehrschicht-Leichtbauplatten, Zargen, Frontblenden oder ähnliches nach ihrem Gebrauch zusammen mit den restlichen Bestandteilen eines Möbels zerkleinert und kompostiert werden. Dies hat insbesondere Vorteile im Bereich von Trendmöbeln oder Ausstellungsständen, welche nach dem Gebrauch umweltfreundlich entsorgt werden können.

Das erfindungsgemäße Möbelteil verfügt zudem über eine geringere Masse gegenüber Massivmöbelteilen bei vergleichbarer Zug- und Druckfestigkeit.

Ein Vorteil ist die schnelle Zersetzung des erfindungsgemäßen Möbelteils nach Kläranlagenbedingungen innerhalb von 14 Wochen, vorzugsweise innerhalb von 8 Wochen. Dies ermöglicht unter anderem auch die Kompostierbarkeit von Kunststoffen, welche in der DIN EN 13432, genannt sind und die als Zusammensetzungsbestandteil in dem erfindungsgemäßen Möbelteil beispielsweise als Klebstoff oder Klebefolie gegen Feuchtigkeit zum Einsatz kommen. Die Abbaugeschwindigkeiten im wässrigen Medium werden durch Standardtests ermittelt, welche von einer Zersetzung des Kunststoffes durch Mikroorganismen im Klärschlamm einer Kläranlage ausgehen und entsprechend simuliert werden.

Es ist weiterhin vorteilhaft, wenn das Schichtmaterial hydrophob ist, sodass das Möbelteil unempfindlich gegenüber Feuchtigkeit ist und somit erst im Umfeld von Mikroorganismen, welche einen biologischen Abbau des Möbelteils in Stoffwechselendprodukte vornehmen, zersetzt wird. Zudem werden mögliche weitere Schichtmaterialien und der Kern des Möbelteils vor Quellung oder Auflösung geschützt. Es ist von Vorteil, wenn das Möbelteil aus einer Mittelschicht aus Kernmaterial, einer Deckplatte aus Schichtmaterial und einer Dekorfolie besteht.

Wenn die biologisch abbaubaren Kunststoffe auf nachwachsenden Rohstoffen basieren, wird nach der aktuellen Definition ein Kohlenstoffdioxid-neutraler Beschlag erhalten. Im Gegensatz zu Beschlägen aus fossilen Rohstoffen wo bei der Abfallentsorgung, bei der Kompostierung sowie bei der Verbrennung zusätzlicher, vormals gebundener Kohlenstoff als Kohlenstoffdioxid freigesetzt wird, werden bei Beschlägen aus nachwachsenden Rohstoffen nur das durch Organismen aus der Atmosphäre gebundene Kohlenstoffdioxid wieder freigesetzt. Beschläge aus nachwachsenden Rohstoffen verhalten sich somit klimaneutral. Kohlenstoffdioxidneutrale Prozesse, sind Prozesse, bei denen das aktuelle Kohlenstoffdioxid-Gleichgewicht nicht verändert wird.

Als Quellen für Polymerwerkstoffe aus nachwachsenden Rohstoffen sind pflanzliche, tierische, mikrobielle oder synthetische Quellen bekannt. Bevorzugt sind hier nachwachsende Rohstoffe mikrobieller Herkunft wie z.B. Poly(hydroxybuttersäure) oder Poly(hydroxyvaleriansäure) bzw. pflanzlicher Herkunft wie z.B. Stärke oder Cellulose zu nennen.

Des weiteren ist eine Herstellung von vollständig abbaubaren Särgen für die Erdbestattung möglich. Selbst bei einer Feuerbestattung verhält sich ein aus diesen Materialien hergestellter Sarg CO₂-neutral.

Die Formteile des Beschlags sind dabei mit den gleichen Herstellungsverfahren wie bei der Nutzung herkömmliche Polymere herstellbar, so dass sie in die gewünschten Formen gebracht werden können und farblich an ein Dekor eines Möbels angepasst werden können. Der Beschlag kann zudem beispielsweise glänzend, transparent oder antistatisch ausgebildet sein.

Der Beschlag ist beispielsweise als Scharnier, Griff, Auszugsführung, Rastbeschlag, Verbindungsbeschlag, Schraube oder Dübel ausgebildet.

Dabei ist es vorteilhaft, wenn der Beschlag durch ein Spritzgussverfahren hergestellt ist. Dadurch lassen sich unterschiedliche Variationen des erfindungsgemäßen Beschlags in hoher Stückzahl und in unterschiedlichen Abmessungen fertigen. Die Oberflächenstruktur des Beschlages ist dabei frei wählbar. Es ist weiterhin vorteilhaft, wenn der Kunststoff einen Schmelzpunkt zwischen 50-190°C, vorzugsweise 80-160°C aufweist, damit eine Verarbeitung über bekannte Spritzgießverfahren möglich ist.

Der Beschlag umfasst vorzugsweise neben dem Formteil ein Metallteil, beispielsweise zur Übertragung von größeren Kräften. Dann kann durch eine Schnellkompostierung des Beschlages der Kunststoffanteil entfernt werden und das Metallteil durch einen Metallabscheider aus der Kompostmasse entfernt werden.

In dem Beschlag ist vorzugsweise ein Kanal zur Verteilung von Klebemittel ausgebildet, um eine dauerhafte unlösbare Verbindung mit einem Möbelteil einzugehen. Gerade bei Leichtbauplatten aus mehreren Schichten kann der Beschlag an der oberen und/oder der unteren Deckplatte befestigt sein, die meist aus einem stabilen Holz- oder Kartonwerkstoff hergestellt ist. Diese Befestigung wird vorzugsweise durch einen biologisch abbaubaren Klebstoff erreicht, welcher in den Kanal eingespritzt wird und nach Aushärtung den Beschlag fest im Möbel verankert.

Der Kunststoff des erfindungsgemäßen Beschlags ist vorzugsweise ein Polyester-Derivat oder ein Salz eines Polyesters. Dies ist insoweit von Vorteil, da viele der Polyester, welche biologisch abbaubar sind, durch eine einstufige chemische Synthese, beispielsweise Polykondensation, oder Biosynthese aus Monomeren gebildet werden. Der Grad der Polymerisation und die Reaktionsgeschwindigkeit, und damit der Grad an Vernetzung lässt sich dabei anhand der Reaktionsbedingungen bestimmen und kontrollieren.

Ein besonders bevorzugter Kunststoff ist ein Copolymer welches Monomere mehrerer Polyester aufweist und somit die positiven Eigenschaften mehrerer Polymere vereinigt. Das Copolymer ist durch Variation der Zusammensetzung derart veränderbar, dass der Beschlag die für die jeweilige Anwendung bevorzugten Eigenschaften erhält. Aus nachwachsenden Rohstoffen gewonnene Monomere sind als kohlenstoffdioxid-neutral anzusehen.

Hierbei sind zudem die Polyhydroxyalkanoate besonders bevorzugt, da deren Monomere oft aus natürlichen Quellen wie nachwachsenden Rohstoffen gewonnen werden, und somit in Hinblick auf die Verfügbarkeit der monomeren Ausgangsstoffe von fossilen Rohstoffen unabhängig sind.

Polymilchsäure, Polyhydroxybuttersäure und Polyhydroxyvaleriansäure, als auch deren Derivate und Salze sind dabei die besonders bevorzugten Kunststoffe, die bei der Herstellung des Formteils genutzt werden. Dabei ist Polyhydroxybuttersäure der Klasse der Thermoplasten zuzuordnen und lässt sich unter Hitzeeinwirkung leicht in eine Form bringen. Es ist ein biologisch voll abbaubares Polymer und zudem hitzebeständig bis etwa 180°C. Alle diese Kunststoffe sind zudem UV-stabil, somit bleichen die Kunststoffe unter Einwirkung von Sonnenlicht nicht aus, sondern bleiben in ihren optischen Eigenschaften erhalten und verleihen somit dem Möbel ein hochwertiges Aussehen.

Neben Polymilchsäure (PLA - Polylactide), Polyhydroxyalkanoate (PHA, auch Poly(β-hydroxyalkansäure)n, Polyhydroxy-β-alkanoate, PHF - Poly(β-hydroxyfettsäure)n), insbesondere Polyhydroxybutyrate (PHB - Polyhydroxybuttersäure, Poly(β-hydroxybuttersäure)) und Polyhydroxyvaleriansäure (PHV, Poly( β-hydroxyvaleriansäure)) eignet sich weiterhin Polyhydroxybutyrat-cohydroxyalonate (PHBV, Copolyester aus β-Hydroxybuttersäure und β-Hydroxyvaleriansäure, PHB-V - Copolymere von Poly(β-hydroxybuttersäure) mit Poly(β-hydroxyvaleriansäure), Poly(β-hydroxybuttersäure-co-β-hydroxyvaleriansäure)), Polyhydroxybutyrat-co-hydroxyhexanoate (PHBH) Celluloseacetate (CA) zur Herstellung von Beschlägen, Möbelteilen und Möbeln.

Als Ausgangsstoffe für Biokunststoffe aus regenerativen Rohstoffquellen können beispielsweise fermentativ hergestellte Bernsteinsäure oder fermentativ hergestellte Fumarsäure, die zu Polyestern weiter verarbeitet werden können, dienen.

Aus Rizinusöl bzw. Rizinolsäuremethylester gewonnene Sebacinsäure (Decandisäure, Octan-1,8-dicarbonsäure) kann beispielsweise als Grundlage zur Herstellung von Biopolyamid dienen. Aus nachwachsenden Rohstoffen können beispielsweise Dicarbonsäuren, Diole oder Diamine gewonnen werden, zur Herstellung von Polyester und Polyamide mit einem biologischen Anteil von bis zu 100 Prozent.

Biologisch abbaubare Werkstoffe (BAW) werden hauptsächlich von Polyestern (PE) und Stärke aus nachwachsenden Rohstoffen gebildet, wie z. B. Poly(3-hydroxybutyrat) (PHB) und Polylactat. Weiterhin können Blends aus Stärke und beispielsweise Polymilchsäure Verwendung finden. Weitere BAW basieren auf Polyesteramiden u. Cellulose-Derivaten aus nachwachsenden Rohstoffen. BAW können Gegensatz zu konventionellen Kunststoffen durch Mikroorganismen in natürliche Stoffwechselprodukte abgebaut werden. BAW eignen sich ebenfalls zur Herstellung von erfindungsgemäßen Beschlägen, Möbelteilen und Möbeln.

Als nachwachsende Rohstoffe, werden biogene Ressourcen aus Aquakulturen und aus land- und forstwirtschaftlichen Quellen bezeichnet. Nachwachsende Rohstoffe werden üblicherweise nach ihren Hauptinhaltsstoffen eingeteilt. Im Bereich der Pflanzenrohstoffe unterscheidet man zucker- und inulinhaltige Pflanzen, stärkehaltige Pflanzen, proteinhaltige Pflanzen, Ölpflanzen, cellulosehaltige Pflanzen und Faserpflanzen. Zusätzlich dazu fallen große Mengen an Ernterückständen beispielsweise Stroh und in der Industrie z. B. Molke an, die ebenfalls als nachwachsende Rohstoffe stofflich genutzt werden können. Eine weitere Quelle nachwachsender Rohstoffe stellen Meerestiere, beispielsweise für Chitin und Chitosan und Algen, dar.

Als bioabbaubare Polymere werden natürliche und synthetische Polymere, die kunststoffähnliche Eigenschaften (Thermoplastifizierbarkeit, Kerbschlagzähigkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden, bezeichnet. Bioabbaubare Polymere können pflanzlichen, tierischen und mikrobiellen Ursprungs sein, durch chemische Synthese aus natürlichen Polymerbausteinen gewonnen werden. Pflanzlichen Ursprungs sind vorwiegend Stärke- und Cellulose-Derivate, tierischen Ursprungs sind Chitin und das hieraus gewinnbare Chitosan, sowie Casein. Zu den bekanntesten fermentativ erzeugten Polymerwerkstoffen gehört die Gruppe der Poly-(β-hydroxyalkansäuren) (PHA), von denen die Poly(β-hydroxybuttersäure) (PHB), das Copolymer Poly(3-hydroxybutyrat-co-3-hydroxyvalerat) die Polymilchsäure (PLA) eine besondere Eignung zur Herstellung von Beschlägen, Möbelteilen und Möbeln zeigen. Die aus nachwachsenden Rohstoffen synthetisch hergestellten Polymere sind hauptsächlich Polyester, Polyamide und Polyurethane.

Als Biopolymere werden die in allen Zellen in großer Zahl vorkommenden, durch Polymerisation kleiner Grundbausteine gebildeter Makromoleküle, die Träger der wichtigsten Lebensfunktionen der Zellen sind, bezeichnet. Ein Biolpolymer gemäß dieser Definition ist beispielsweise die fermentativ gewonnene Poly(β-hydroxybuttersäure).

Durch Kombination der Monomere von Polyhydroxybuttersäure und Polyhydroxyvaleriansäure und deren Derivate und Salze in einem Copolymer können weitere vorteilhafte Eigenschaften gezielt beeinflusst werden. So wird beispielsweise sprödes und steifes Material aus Polyhydroxybuttersäure flexibler und erhält zudem eine höhere Schlagfestigkeit, bei zunehmenden Anteilen an Polyhydroxyvaleriansäure. Polyhydroxybuttersäure hingegen ist beständig gegenüber Feuchtigkeit und absorbiert Gerüche oder Aromen nur in geringem Maße. Besonders bevorzugt werden Monomerkomponenten verwendet, welche biologisch verfügbar sind und somit zusätzlich umweltschonend verfügbar sind.

Ein weiterer Vorteil ist die schnelle Zersetzung der biologisch abbaubaren Kunststoffe unter Kläranlagenbedingungen innerhalb von 14 Wochen, vorzugsweise innerhalb 8 Wochen.

Der biologisch abbaubare Kunststoff kann in einer weiteren Ausführungsform ein Stärkewerkstoff oder Stärkeblend sein. Ein Kunststoff im Sinne der Anmeldung soll alle Stoffe umfassen, die synthetisch hergestellt und zu einem Formteil verarbeitet werden können.

Das Stärkeblend besteht insbesondere aus einer kontinuierlich hydrophoben Polymerphase und einer hydrophilen Phase aus dispers verteilten Stärkemolekülen, welche sich im Schmelzvorgang verbinden. Die so erhaltenen Stärkeblends können als Stärkegranulat platzsparend angeordnet sein.

Zudem ist nach Anspruch 12 ein Möbel vorgesehen, welches einen Beschlag mit einem Formteil aus biologisch abbaubarem Kunststoff aufweist.

Dieses Möbel ist für den normalen Hausgebrauch geeignet, kann aber auch als Erdmöbel beispielsweise als Sarg ausgebildet sein, welcher aus biologisch abbaubarem Kartonmaterial, biologisch abbaubaren Fasermaterial oder biologisch abbaubarem Kunststoff besteht und Scharniere, Verschraubungen und Schmuckbeschläge aus biologisch abbaubarem Kunststoff aufweist, sodass eine schnelle Verrottung der Einzelbestandteile des Sarges gegeben ist.

Zudem ist eine umweltgerechte Entsorgung eines derart hergestellten Möbelstückes gemäß der DIN EN 14995 und 13432 durch aerobe Kompostierung gewährleistet. In einigen Fällen ist sogar eine anaerobe Kompostierung oder eine Kombination aus beiden Kompostierungsmethoden, nach einem analogen Prüfverfahren und einer maximalen Prüfdauer von 5 Wochen, möglich.

Es ist zudem vorteilhaft, wenn der Beschlag durch einen Klebstoff an oder im Möbel fixiert ist. Dadurch wird das Möbel belastbarer und ermöglicht zudem die Ausführung eines Möbels in Leichtbauweise. Durch den Kleber sind die Beschläge und daran befestigte Möbelteile adhäsiv am Möbelgrundkörper fixiert. In Anbetracht an die Kompostierbarkeit des Möbels ist der Kleber in seiner Zusammensetzung biologisch abbaubar.

Bevorzugte Klebstoffe sind hierbei Casein und/oder Glutin. Während Glutin wasserlöslich und daher durch Verdünnung mit Wasser auf der Oberfläche des Formteils verteilt werden kann, ist Casein wasserunlöslich und löst sich nicht durch Feuchtigkeit von der Oberfläche ab. Abhängig vom Einsatzgebiet des jeweiligen Beschlags kann somit eine besonders rohstoffsparende Auftragsweise mit Glutin gewählt werden. Bei Beschlägen für Badmöbel empfiehlt sich eher das Auftragen von Caseinklebstoffen. Beide Klebstoffe sind durch Kompostierung biologisch abbaubar.

Der Klebstoff Casein wird z.B. aus einer tierischen nachwachsenden Rohstoffquelle gewonnen.

Die Mittelschicht der Leichtbauplatten weicht in ihren chemischen und / oder physikalischen Eigenschaften von den mindesten zwei Deckplatten ab. Derzeit sind Mittelschichten bekannt, die aus leichten Hölzern wie z.B. Balsa bestehen. Eine weitere Möglichkeit ist, die Mittelschicht aus Naturfasern wie z.B. Hanf- oder Strohfasern aufzubauen. Weiterhin können in der Mitteschicht Hohlräume wie z.B. bei Strangpress-Röhrenspanplatten oder Wabenplatten erzeugt werden. Außerdem kann die Dichte zwischen Mittelschicht und Decklagen variiert werden, um eine Leichtbauplatte zu erhalten. Denkbar ist auch, die Mittelschicht als Stärkeschaum auszuführen wie z.B. bei Schaumkernplatten. Weiterhin ist denkbar, zur Erhöhung der Stabilität zusätzlich weitere mit den physikalischen und / oder chemischen Eigenschaften der Deckplatten identische Zwischenplatten in das Verbundmaterial einzubringen. Des weiteren ist dieses Verfahren für jegliche nach dem zuvor beschriebenen Konzept aufgebaute bisher nicht bekannte Leichtbauplatten geeignet. Die Deckplatten der Leichtbauplatten sind bevorzugt darauf ausgelegt Zug- und Druckbelastungen standzuhalten, die Mittelschicht hält bevorzugt Druckbelastungen stand. Eine weitere Betrachtung kann aus Sicht eines Doppel-T Trägers wie er aus dem Maschinenbau bekannt ist, erfolgen. Die Mittelschicht einer Leichtbauplatte wirkt sich gemäß dieser Betrachtung weniger auf das Widerstandsmoment der Leichtbauplatte aus, als die Deckplatten.

Vorzugsweise enthält das Kernmaterial, das Schichtmaterial, der Klebstoff, die Dekorfolie, das Zwischenschichtmaterial, die Kantenleiste und/oder der Beschlag einen biologisch abbaubaren Kunststoff. Der Kunststoff ist vorzugsweise ein Polyester-Derivat oder ein Salz eines Polyesters. Dies ist insoweit von Vorteil, da viele der Polyester, welche biologisch abbaubar sind, durch eine einstufige chemische Synthese, beispielsweise Polykondensation, oder Biosynthese aus Monomeren gebildet werden. Der Grad der Polymerisation und die Reaktionsgeschwindigkeit, und damit der Grad an Vernetzungen, lässt sich dabei anhand der Reaktionsbedingungen bestimmen und kontrollieren. Ebenso ist eine Kombination von Monomeren mehrerer Polyester möglich und wodurch die positiven Eigenschaften mehrerer Polymere vereinigt werden. Das entsprechende Copolymer ist durch Variation der Zusammensetzung derart veränderbar, dass der Beschlag das jeweilige Material für die Leichtbauplatte mit für die jeweilige Anwendung bevorzugten Eigenschaften erhält.

Die Dekorfolie ist oberflächenstrukturiert und kann farblich beispielsweise durch Zugabe von Farbpigmenten auf ein gewünschtes Dekor eingestellt werden. Dabei kann die Dekorfolie je nach Material der verwendeten Kunststoffe beispielsweise glänzend, transparent und antistatisch gefertigt sein. Die Dekorfolie kann auch aus biologisch abbaubaren Kunststoffen gefertigt werden.

Weiterhin vorteilhaft ist ein Möbelteil welches im Kernmaterial, in paralleler Anordnung zum Schichtmaterial, eine oder mehrere Lagen eines biologisch abbaubaren Zwischenschichtmaterials, mit einer größeren Dichte als das Kernmaterial, aufweist. Dieses Zwischenschichtmaterial kann aus dem selben Material gefertigt sein, wie das Schichtmaterial und bewirkt eine höhere Stabilität bei Druckbelastung im Vergleich zu Möbelteilen ohne Zwischenschicht. Dies betrifft beispielsweise Ausführungsformen von Möbelteilen mit einer Kernschichtdicke von mehreren Zentimetern oder Möbelteile die geringflächig belastet werden.

Bei einem weiteren vorteilhaften Möbelteil ist an einem Außenrand eine Kantenleiste angebracht, welche das Möbelteil vor einer seitlichen Krafteinwirkung auf das Kernmaterial des Möbelteils schützt und die Sicht auf das Kernmaterial verdeckt.

Das Schichtmaterial ist vorteilhafterweise durch einen Klebstoff auf Glutin und/oder Caseinbasis mit dem Kernmaterial verbunden. Während Glutin wasserlöslich und daher durch Verdünnung mit Wasser auf der Oberfläche des Kernmaterials verteilt werden kann, ist Casein wasserunlöslich und löst sich nicht durch Feuchtigkeit von der Oberfläche ab. Abhängig vom Einsatzgebiet des jeweiligen Möbelteils kann somit eine besonders rohstoffsparende Auftragsweise mit Glutin gewählt werden. Bei Badmöbeln empfiehlt sich eher das Auftragen von Caseinklebstoffen. Beide Klebstoffe sind durch Kompostierung biologisch abbaubar.

Die geringe Masse des Möbelteils wird vorzugsweise durch das Kernmaterial bestimmt. Je voluminöser Luftkanäle oder Einschlüsse in dem Kernmaterial ausgebildet sind, desto leichter ist das erfindungsgemäße Möbelteil. Gleichzeitig muss das Kernmaterial auch belastbar sein. Dies wird insbesondere durch eine schwamm-, waben-, röhren- oder strangartige Ausgestaltung des Kernmaterials erreicht.

Für die Realisierung der vorteilhaften Leichtbauweise ist zudem die Dichte des Kernmaterials von Bedeutung. So kann das Kernmaterial breitflächig als Schaum, in Schichten von kugelförmig verklebtem Granulat oder als Fasern ausgebildet sein.

Die Herstellung des Möbelteils ist vorzugsweise unabhängig von der begrenzten Verfügbarkeit fossiler Rohstoffe. Die Produktion von Polysachariden in der Natur, insbesondere von Cellulose und Stärke, beträgt jährlich das Tausendfache der industriellen Produktion an vollchemischen Kunststoffen auf Erdölbasis. Diese hohe Verfügbarkeit an Rohstoffen ermöglicht eine großindustrielle Serienproduktion des erfindungsgemäßen Möbelteils bei anschließender Rückführung sämtlicher Rohstoffe in den Stoffkreislauf der Natur. Es ist daher besonders vorteilhaft sowohl ein Kernmaterial als auch mindestens ein Schichtmaterial auf Polysacharidbasis miteinander zu verbinden.

Um Möbelteile in verschiedener Weise einsetzen zu können, sind vorteilhafterweise Beschläge am oder im Möbelteil befestigt. Diese Beschläge ermöglichen ein Zusammensetzen von einzelnen Möbelteilen zu einem Möbel und haben zudem funktionelle und dekorative Aufgaben. Sie sind beispielsweise als Scharnier, Griff, Auszugsführung, Rastbeschlag, Schraube oder Dübel ausgebildet. Erst die vorteilhafte Verbindung von dem erfindungsgemäßen Möbelteil mit den beschriebenen Beschlägen ermöglicht eine hohe Variation an Möbeln wie beispielsweise Schränke, Schubfächer und Kommoden.

Es ist zudem vorteilhaft, wenn das Möbel aus Leichtbauplatten zusammengesetzt ist, da durch derartige Platten eine optische Aufwertung des Möbels erreicht wird. Diese Platten sind aufgrund ihrer Holz/Karton - Bauweise leicht zu schreddern und daher eignen sie sich besonders für eine mögliche Kompostierung nach Ablauf des Möbellebenszyklus des erfindungsgemäßen Möbels. Denkbar ist auch die Nutzung von Leichtbauplatten aus biologisch abbaubarem Kunststoff.

Durch die Herstellung eines erfindungsgemäßen Möbels aus erfindungsgemäßen Möbelteilen und erfindungsgemäßen Beschlägen kann das gesamte Möbel zerkleinert, beispielsweise gehäckselt, werden um es dem biologischen Abbau zugänglich zu machen. Alternativ kann das geschredderte Material zur Herstellung neuer Möbelteile dienen. Bei Verwendung von Metallteilen können diese über Metallabscheider vor der Kompostierung oder der erneuten Verwendung des geschredderten Möbels entfernt werden.

Somit können insbesondere kurzlebige Trendmöbel umweltschonend hergestellt werden und das Material einem Kreislauf zugeführt werden. Die vorwiegend im Leichtbaubereich verklebten Beschläge müssen vor der Entsorgung durch Kompostierung oder dem Recycling nicht entfernt werden. Somit entfällt die aufwändige Demontage eines Möbels vor der Entsorgung. Durch die Verwendung gleicher oder zumindest ähnlicher Materialien kann das Möbel entweder der Entsorgung z.B. durch Kompostierung oder dem Recycling zugeführt werden. Der Kunde kann im Mitnahmemarkt ein Möbel entsprechend dem aktuellen Trend erwerben und nach der Nutzung beim Mitnahmemarkt zur Entsorgung zurückgeben. Nach der Rückgabe wird das Möbel geschreddert und der Kompostierung zugeführt oder geschreddert und zur Herstellung neuer Möbelteile verwendet. Für die Herstellung neuer Möbelteile kann ein Anteil neuer biologisch abbaubarer Rohstoffe aus regenerativen Quellen zugeführt werden.

Gemäß folgender Verfahrensschritte ist die Herstellung eines erfindungsgemäßen Möbelteils denkbar:

Im ersten Schritt wird ein Schaumkern bevorzugt stärkebasiert erzeugt, dies kann durch Aufschäumen bei gleichzeitiger Formgebung erfolgen. Alternativ wird das erzeugte Schaurnelement nach dem Aufschäumen auf das benötigte Format zugeschnitten.

Es werden zur Erzeugung des Verbundmaterials die zuvor separat gefertigten Deckplatten aus Schichtmaterial, bevorzugt aus Karton, zugeführt. Die Deckplatten und / oder der Schaumkern aus Stärke werden nun angefeuchtet um eine Verklebung der Schichten über die klebenden Eigenschaften der Stärke zu erzielen. Danach werden die Schichten zusammengeführt und z.B. über Kalander mit definierten Druck zusammengefügt. Danach können die so erzeugten Möbelteile Wärme ausgesetzt werden um die überschüssige Feuchtigkeit vom Fügevorgang aus dem Verbundmaterial auszutreiben. Jetzt können nach dem Zuschnitt die Kantenleisten angebracht werden. Der Zuschnitt und das Anbringen der Kantenleisten kann beim Hersteller oder beim Kunden erfolgen. Die Dekorfolien können beim Zusammenfügen der Schichten aufgebracht werden. Eine Verklebung der Dekorfolien mit den Deckplatten ist mit biologisch abbaubaren Klebstoff vorgesehen.

Alternativ können die das Schichtmaterial bildenden Komponenten zuerst als aufgeschäumte Kugeln aus Stärke vorliegen. Das hat den Vorteil, dass sie auch erst beim Möbelhersteller zu einem Verbundmaterial verarbeitet werden können. Der Transport könnte z.B. in Silofahrzeugen erfolgen. Der Möbelsteller hat somit die Möglichkeit, nahezu jegliche Form aus den einzelnen Komponenten zu erstellen. Hier ist vorgesehen, dass in z.B. eine Zargenform die äußere Kontur aus Karton oder einem biologisch abbaubaren Kunststoff erstellt wird. Nachher kann der entstehende Hohlraum mit den aufgeschäumten Kugeln aus Stärke ausgefüllt werden, durch die Zuführung von Feuchtigkeit z.B. in der Form von Wasserdampf kann ein Verkleben der Kugeln untereinander und mit dem Material der Kontur erreicht werden. Zusätzlich kann die Klebewirkung durch Druckeinwirkung erhöht werden. Danach kann z.B. durch Wärmezuführung die überschüssige Feuchtigkeit aus dem System entfernt werden. Die so entstandenen Möbelteile können direkt vor Ort beim Möbelhersteller weiterverarbeitet werden.

Dadurch, dass die Rohstoffe platzsparend in Silofahrzeugen oder anderen geeigneten Gebinden transportiert werden können sind Einsparungen von Transportkosten zu erwarten, was wiederum der Umwelt zugute kommt.

Durch die Variation der Kugelgröße kann auch Einfluss auf die Packung der Zwischenschicht, also auf die Lufteinschlüsse zwischen den Kugeln genommen werden, es können somit verschieden große Hohlräume erzeugt werden.

In der Folge werden mehrere Ausführungsbeispiele für erfindungsgemäße Beschläge und Möbelteile anhand von Zeichnungen näher beschrieben. Sie zeigen:
- Fig. 1A und 1B: mehrere Ansichten einer Leichtbauplatte mit einem erfindungsgemäßen Beschlag
- Fig. 2A bis 2D: mehrere Ansichten eines Ausführungsbeispieles eines Beschlags als Verbindungselement;
- Fig. 3: eine perspektivische Explosionsdarstellung eines erfindungsgemäßen Beschlags als Verbindungssystem;
- Fig. 4A und 4B: zwei Ansichten des zuvor beschriebenen Verbindungssystems gemäß eines modifizierten Ausführungsbeispiels,
- Fig. 5A und 5B: zwei perspektivische Ansichten des Verbindungssystems der Fig. 4 im montierten Zustand;
- Fig. 6: einen geschnittene Ansicht eines weiteren Ausführungsbeispiels;
- Fig. 7: eine Perspektivdarstellung des zuvor beschriebenen Ausführungsbeispiels nach Fig. 6;
- Fig. 8 bis 12: eine erste Ausführungsform eines erfindungsgemäßen Wälzkörperkäfigs in unterschiedlichen schematischen Ansichten,
- Fig. 13 bis 16: eine zweite Ausführungsform eines erfindungsgemäßen Wälzkörperkäfigs in unterschiedlichen schematischen Ansichten.
- Fig. 17A und 17B: die Querschnitte zweier Mehrschicht-Leichtbauplatten

Der Beschlag für Möbel kann verschiedene Funktionen und Eigenschaften besitzen. Beispielsweise kann der Beschlag als Klebedübel ausgebildet sein und entsprechend den Ausführungsbeispielen der DE 20 2008 013 067 oder der DE 20 2008 013 611 ausgebildet sein. Andere Beschläge, für die sich der Gegenstand der vorliegenden Anmeldung eignet, sind in der DE 20 2008 015 732, DE 20 2007 015 604, DE 20 2008 015 704, DE 20 2008 015 731 oder der DE 20 2008 015 722 beschrieben. Auch in der DE 20 2009 000 017 und der DE 20 2009 000 019 sind für die Erfindung geeignete Beschläge offenbart. Weiterhin sind in der DE 20 2007 015 604, der WO 2006/106131 A1, der WO 2009/050239 A1, der WO 2009/059821 A1 geeignete Beschläge offenbart.

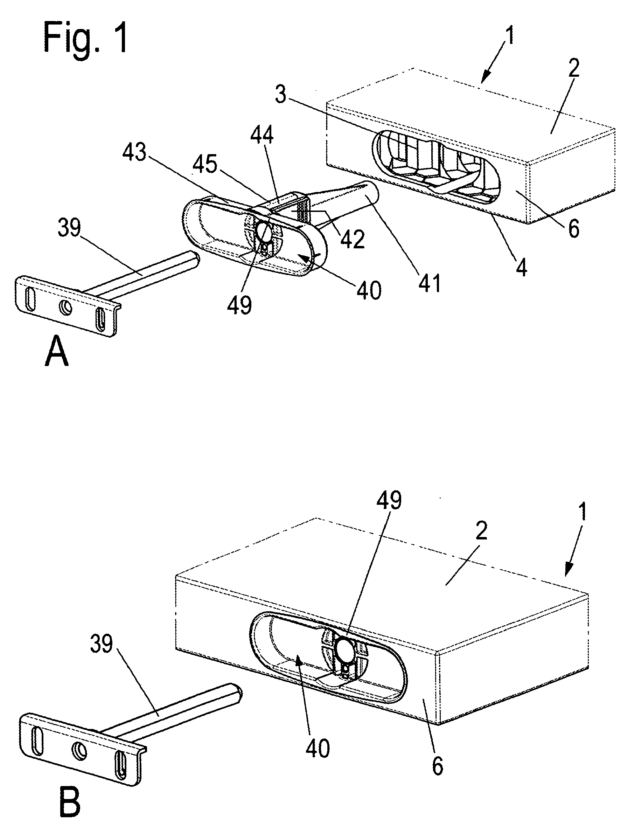

In den Fig. 1A und 1B ist eine Ausführungsform eines Beschlages 40 dargestellt, der einen länglichen Gehäusetopf 43 aufweist, von dem ein Vorsprung 42 in die Mittelschicht 3 einer Leichtbauplatte 1 hervorsteht. An dem Vorsprung 42 ist ferner ein Rohrelement 41 zur Festlegung eines Beschlagsteils 39 ausgebildet. An dem Vorsprung 42 ist eine Klebemittelkammer 44 ausgebildet, die an gegenüberliegenden Seiten durch Wandabschnitte 45 begrenzt ist. An dem Gehäusetopf 43 ist an der Außenseite ein senkrecht zum Bohrkanal hervorstehender Flansch 49 ausgebildet, der einen Anschlag bei Einstecken des Beschlagteils 39 ausbildet.

Ferner wird Klebemittel über zwei Klebemittelkanäle mit einer Blende in den Beschlag 40 eingespritzt, damit das Klebemittel sich in der Klebemittelkammer 44 an gegenüberliegenden Seiten des Beschlages 40 verteilen kann und eine feste Verbindung zwischen dem Beschlag 40 und den Deckplatten 2 und 4 herstellt. Der Beschlag 40 wird in die Stirnseite 6 der Leichtbauplatte 1 eingesetzt.

Sowohl der Beschlag 40 als auch die Leichtbauplatte 1 kann aus biologisch abbaubaren Kunststoff bestehen, welcher voll kompostierbar ist. Die filigrane Ausgestaltung des Beschlages, insbesondere die Ausgestaltung der Klebstoffkanäle 47, muss bei der Polymerauswahl berücksichtigt werden, da nicht jeder Kunststoff in den verschiedenen Wandstärken für einen derartigen Beschlag geeignet ist.

Die die Klebemittelkammer 44 zur Sichtseite begrenzenden Wandabschnitte können in einer Ausführungsvariante als Klebesichtfenster ausgebildet sein. Diese Klebesichtfenster bestehen aus einem transparenten oder zumindest transluzenten Kunststoff mit geringer Wandstärke.

Zudem muss der Kunststoffbeschlag zumindest resistent gegenüber der Klebstoffzusammensetzung sein, welche beim Verkleben des Beschlags mit der Leichtbauplatte genutzt wird.

Das Beschlagsteil 39 kann alternativ aus Metall geformt sein und mittels eines Metallabscheiders von dem in die Leichtbauplatte versenkten Beschlag vor dem Kompostieren getrennt werden.

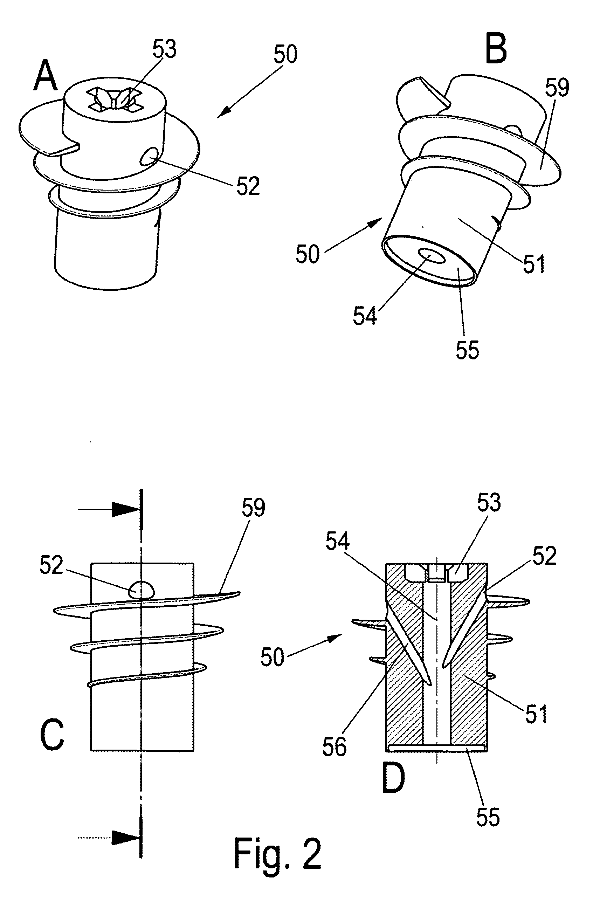

In den Fig. 2A bis 2D ist eine Ausführungsform eines Verbindungselementes gezeigt. Das Verbindungselement ist als einteiliger Dübelkörper 50 ausgebildet, der ein im wesentlichen zylindrisches Teil 51 umfasst, in dem ein Kanal 54 in Längsrichtung angeordnet ist. Der Kanal 54 weist an einer ersten Stirnseite eine Zuführöffnung 53 und an der gegenüberliegenden Stirnseite eine erste Mündung 55 auf. An dem Kanal 54 sind mehrere Abzweigungen 56 angeordnet, die an einer Außenseite des zylindrischen Teils 51 Mündungen 52 aufweisen. Ferner ist an der Außenseite des Dübelkörpers 50 eine radial hervorstehende Spirale 59 ausgebildet, die mehrere Windungen aufweist.

Da auf diese Windungen der Spirale 59 eine hohe Zugkraft wirkt, ist insbesondere in den Bereichen, an welchen die Spirale 59 in das zylindrische Teil 51 übergeht, eine hohe Zugfestigkeit notwendig.

Ein entsprechendes Verbindungselement weist dabei ein Zug-E-Modul von mindestens 1000 MPa, vorzugsweise mindestens 2500 MPa, beispielsweise 3500 MPa und eine Zugfestigkeit nach ISO 527 von mindestens 10MPa, vorzugsweise mindestens 25MPa, beispielsweise 35MPa, auf, sowie eine Schlagzähigkeit von mindestens 6 kJ/m² , vorzugsweise mindestens 10 kJ/m² nach ISO 179-1/1 eU.

Dabei kann das Verbindungsteil, analog zu anderen genannten Ausführungsbeispielen, in einem Spritzgussverfahren, insbesondere mittels Heißkanalsystemen, beispielsweise bei einer Temperatur von 190°C nach Bedingungen gemäß ISO 1133, mit ca. 5kg, bei einer Volumenfließrate von 8-12 cm³/10min hergestellt werden. Dabei kann u.a. Polymilchsäure als eine biologisch abbaubare Komponente genutzt werden.

Zudem muss das Material der in Fig. 2A-D abgebildete Ausführungsvariante widerstandsfähig gegenüber einer seitlichen Kraftausübung, beispielsweise bei den Kreuzschlitzstegen der Zuführöffnung 53, sein, um ein Eindrehen des Verbindungselements in eine Platte oder dergleichen zu gewährleisten, ohne dass die Kreuzschlitzfassung nachgibt und das Greifen eines Kreuzschlitz-Schraubendrehers unmöglich macht.

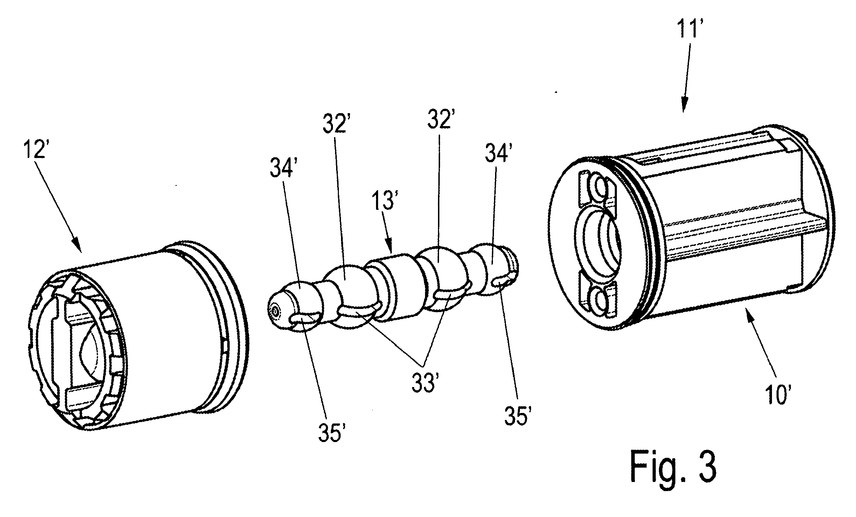

In Fig. 3 ist ein Verbindungssystem 10' dargestellt. Um die Einsätze 11' und 12' miteinander zu verbinden, ist ein Verbindungselement 13' vorgesehen, das zapfenförmig ausgebildet ist und einen zylindrischen Mittelabschnitt aufweist. Das Verbindungselement 13' ist zu einer Mittelebene symmetrisch ausgebildet und umfasst an jeder Seite zwei Rastnocken 32' und 34'. Die Rastnocken 32' und 34' sind als ringförmige gewölbte Abschnitte ausgebildet, die nach außen hervorstehen und eine gewisse Elastizität aufweisen. Hierfür sind in den Rastnocken 32' und 34' längliche Schlitze 33' und 35' vorgesehen, die ein gewisses Zusammendrücken der Rastnocken 32' und 34' ermöglichen.

Die Einsätze 11' und 12' als auch das Verbindungselement 13' bestehen vollständig oder zumindest teilweise aus biologisch abbaubarem Material. Dabei muss dieses Material, insbesondere im Bereich der Rastnocken 32' und 34' eine hohe Festigkeit aufweisen, so dass es nicht zu einem unbeabsichtigten Lösen des Verbindungssystems durch Materialbruch kommt.

Die Anordnung mit unterschiedlichen Durchmessern für die Rastnocken 32' und 34' bewirkt, dass das Verbindungselement 13' beim Eintauchen in die Einsätze 11' oder 12' schon einseitig gehalten wird und nicht kippen kann, da die Mittelachse ortsfest bestimmt ist. Dadurch wird die Stabilität des Verbindungssystems entscheidend verstärkt.

Das Verbindungselement 13' dient zum Verrasten der beiden Einsätze 11' und 12' miteinander.

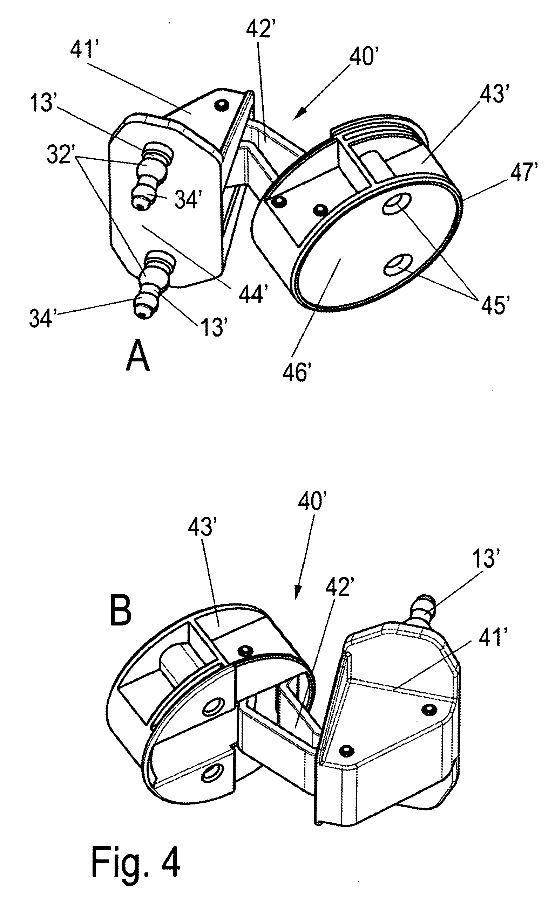

In den Fig. 4A und 4B ist eine modifizierte Ausführungsform eines Verbindungselementes 40' gezeigt, das als Scharnier ausgebildet ist und ein erstes Scharnierteil 41' aufweist, das über ein Gelenkelement 42' mit einem Scharniertopf 43' verbunden ist. An dem ersten Scharnierteil 41' ist eine Platte 44' ausgebildet, von der zwei beabstandete Verbindungselemente 13' hervorstehen, die in Form eines halben Verbindungselementes 13' ausgebildet sind und Rastnocken 32 und 34 aufweisen.

An dem Scharniertopf 43' sind Injektionskanäle 45' ausgebildet, die an einer Klebefläche 46' münden, die von einem Ring 47' umgeben ist, so dass sich an der Klebefläche 46' injiziertes Klebemittel ansammeln kann und den Scharniertopf 43' in einer Leichtbauplatte festlegt.

Das Gelenkelement 42' kann zudem in Richtung der Hauptkrafteinwirkung mit Naturfasern oder anderem biologisch abbaubarem Fasermaterial versehen sein, welches zur Stabilisierung in den Polymerkörper eingelassen ist.

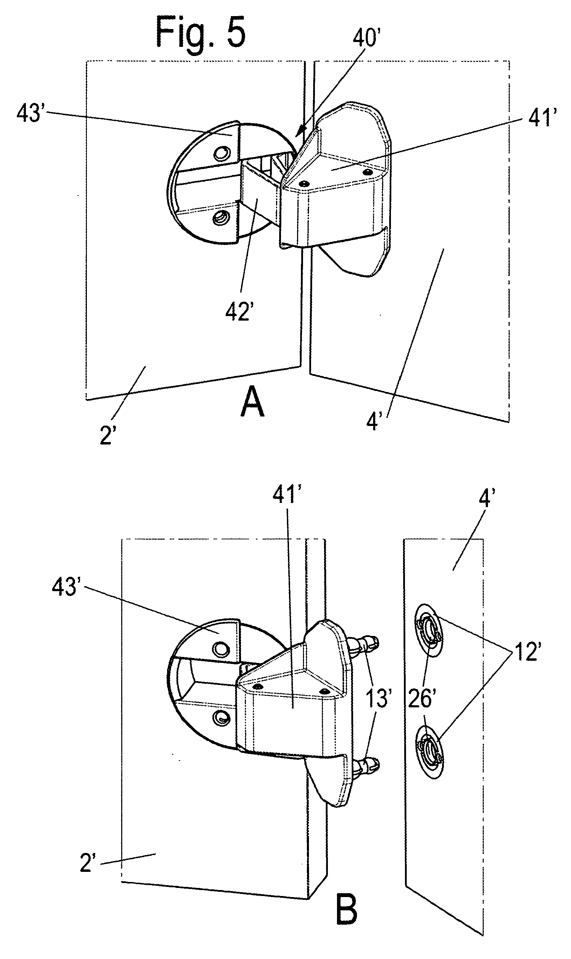

In den Fig. 5A und 5B ist das Verbindungselement 40' in der montierten Position gezeigt, in der der Scharniertopf 43' an einer Platte 2' festgelegt ist. Das über das Gelenkelement 42' angelenkte erste Scharnierteil 41' ist mit einer Deckplatte 4' verbindbar, an der für jedes zapfenförmige Verbindungselement 13' ein Einsatz 12' mit einer Aufnahme 26' verklebt ist. Dadurch können auch Klappen durch die Platten 2' montiert werden, ohne dass Werkzeuge oder Kleinteile wie Schrauben benötigt werden. Der Benutzer muss lediglich das Scharnierteil 41' mit den Verbindungselementen 13' in die Einsätze 12' einstecken und verrasten.

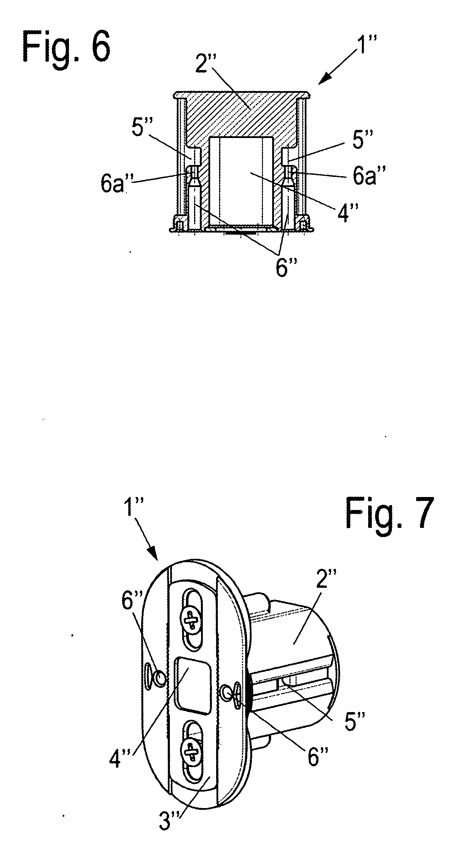

In den Fig. 6 und 7 ist eine Ausführungsform eines Schrankaufhängers 1" für Möbel aus Leichtbauplatten gezeigt.

Der Schrankaufhänger 1" gemäß den Fig. 6 und 7 besteht aus einem einteiligen Gehäuse 2", welches vollständig oder teilweise aus biologisch abbaubarem Kunststoff gefertigt ist und welches ein Tragteil 3" aufweist, welches in den Bereich einer Aufnahme 4" im rückseitigen, stirnseitigen Ende des Gehäuses 2" hineinragt.

Dieses Tragteil 3" besteht aus einer einfachen Tragplatte aus biologisch abbaubarem Kunststoff oder Metall, welches beim Ausführungsbeispiel gemäß den Fig. 6 und 7 von der Seite her in das Gehäuse 2" eingeschoben werden kann. Nach dem Einschieben des Tragteiles 3" in das Gehäuse 2" bildet die Unterkante der Tragplatte 3" denjenigen Abschnitt, über den sich der Schrankaufhänger 1" auf einem an einer Wand oder dergleichen festgelegten, nicht dargestellten Wandhaken abstützen kann.

Dabei kann die Tragplatte eine Masse von beispielsweise 5-10kg tragen, ohne dass es zu Materialbruch oder Ermüdungserscheinungen kommt.

Fig. 6 zeigt besonders anschaulich die Aufnahmekammern 5" und die Kanäle 6", durch welche Klebstoff in die Aufnahmekammern 5" eingebracht werden kann. Außerdem zeigt Fig. 6, dass innerhalb der Kanäle 6" durch Querschnittsverengungen gebildete Blenden 6a" vorgesehen sein können, welche einen Rückfluss von Klebstoff weitestgehend verhindern, bevor dieser Klebstoff letztendlich abgebunden oder ausgehärtet ist.

Die Wandungen der Kanäle 6" sind dabei gegenüber dem Klebstoff inert, so dass der Feuchtegehalt des Klebstoffs die Materialeigenschaften des Tragteils nicht negativ beeinflusst, wie z.B. aufweicht.

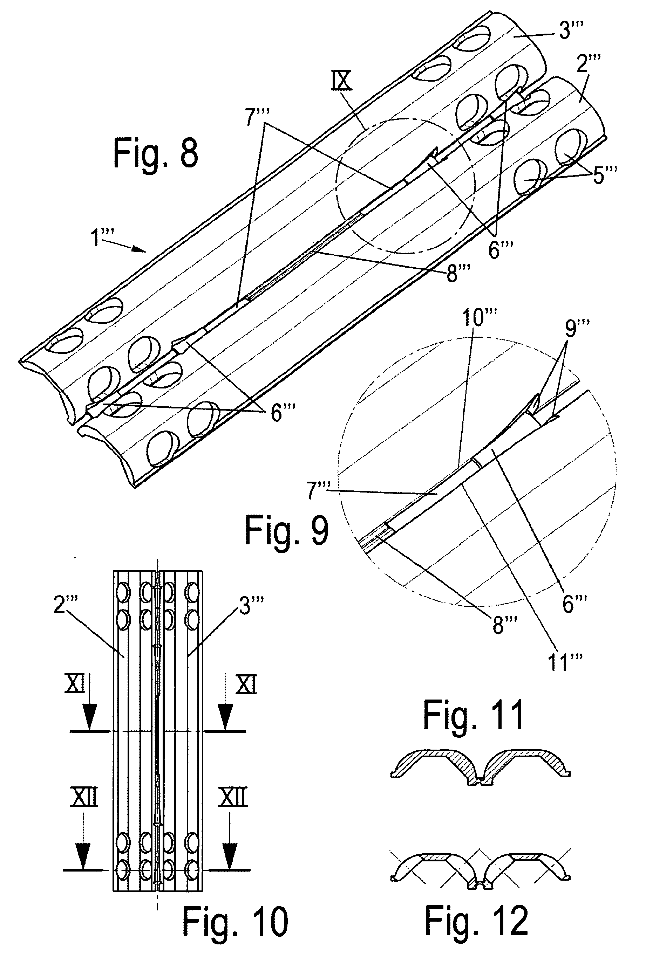

Die Fig. 8 bis 12 zeigen eine erste Ausführungsform eines Wälzkörperkäfigs 1"' zur Aufnahme von kugelförmigen Wälzkörpern, der im Wesentlichen aus zwei Seitenwänden 2"', 3'" besteht, die entlang einer ihrer Längskanten 10"', 11"' durch einen Biegebereich miteinander verbunden sind. Die beiden Seitenwände 2"', 3"' weisen jeweils Wälzkörperführungen in Form von Aussparungen 5"' auf, in denen (nicht gezeigte) Wälzkörper lagerbar sind. Die nicht durch einen Biegebereich miteinander verbundenen Längskanten der Seitenwände sind durch einen Spalt 4'" voneinander getrennt, durch den die Aufhängung einer Schiene hindurchgreift.

Wie besonders gut in den Fig. 9 gezeigt ist, welche jeweils Ausschnittsvergrößerungen der in Fig. 8 mit IX"' bezeichneten Einzelheit zeigen, weist der Biegebereich zwischen den Längskanten 10"', 11'" ein Filmscharnier 8"', einen Spalt 7"' sowie ein bistabiles Blattfederelement 6"' auf. Dieses bistabile Blattfederelement 6'" zeichnet sich durch zwei stabile Positionen aus, welche beide in einer Durchbiegungsrichtung senkrecht zu den Längskanten 10"', 11'" der Seitenwände 2"', 3"' ausgebildet sind. Mit Hilfe eines solchen bistabilen Blattfederelements 6"' kann der Wälzkörperkäfig 1"' zum einen stabil in seiner in den Fig. 8, 10, 11 und 12 gezeigten aufgeklappten Position gehalten werden. Wenn die beiden Seitenwände 2"', 3"' nun zusammen gefaltet werden, muss zunächst eine gewisse Kraft auf die beiden Seitenwände 2''', 3''' in Faltrichtung ausgeübt werden, die einer Rückstellkraft des Blattfederelements 6'" bzw. der Blattfederelemente 6'" entgegenwirkt, bis ein Punkt erreicht ist, an dem die Blattfederelemente 6'" einen Umkehrpunkt erreicht haben und sich anschließend von selbst in ihre zweite stabile Position verbiegen. Durch den Einsatz solcher bistabiler Blattfederelemente 6"' ist damit eine einfache und effektive Positionierung der Seitenwände 2"', 3"' des Wälzkörperkäfigs 1"' ermöglicht. Das gezeigte Blattfederelement 6"' ist als eine einen Spalt 7"' zwischen beiden Seitenwänden 2"', 3"' überbrückende Matte mit seitlich hervorstehenden Flügeln 9''' ausgebildet.

Dieses Blattfederelement ist aus einem biologisch abbaubaren Kunststoff insbesondere einem Polymilchsäurederivat gebildet und verfügt dabei über eine Wandstärke zwischen 0,1-2mm. Dabei verfügt das Material über ein Biege E-Modul von über 3000 MPa und eine Zugfestigkeit von über 3200MPa.

Dadurch ist gewährleistet, dass das Blattfederelement nicht bricht.

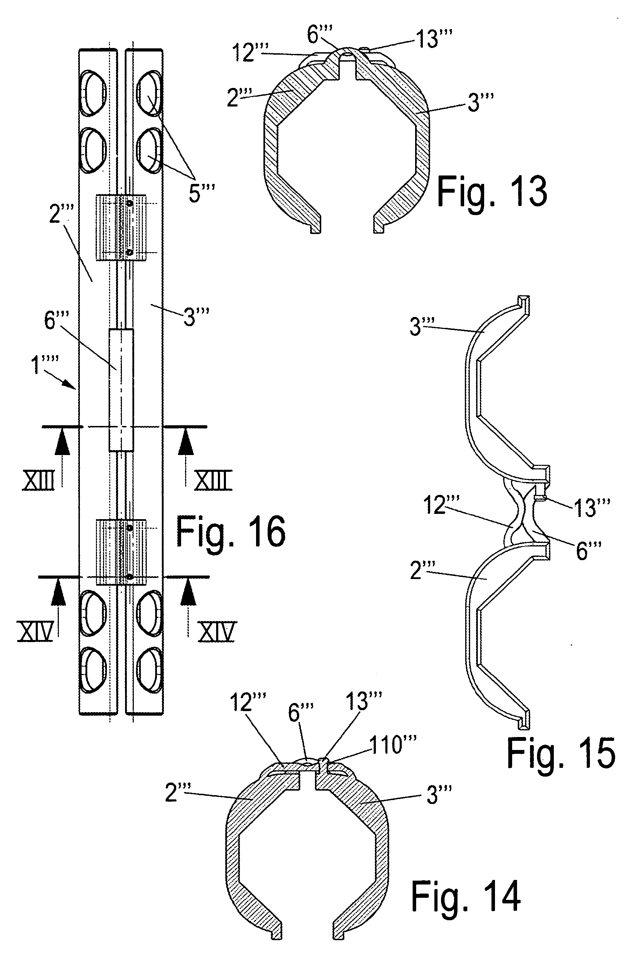

Die Fig. 13 bis 16 zeigen eine zweite Ausführungsform eines erfindungsgemäßen Wälzkörperkäfigs 1''''. Diese ist im wesentlichen ähnlich aufgebaut wie der in den Fig. 8 bis 12 gezeigte Wälzkörperkäfig 1''''. Im Unterschied zu diesem ist hier nur ein bistabiles Blattfederelement 6'" vorgesehen, das hier etwa auf halber Länge des Wälzkörperkäfigs 1'''' zentral angeordnet ist. Rechts und links des Blattfederelements 6'" sind zusätzliche Rastelemente angeordnet. Diese zusätzlichen Rastelemente bestehen aus einem an den Seitenwänden des Wälzkörperkäfigs 1'''' anhaftenden elastischen Filmscharnier 12"' sowie einem Druckknopf 13"', der im zusammengefalteten Zustand der den Wälzkörperkäfig 1"' bildenden Seitenwände 2''', 3''' durch eine Öffnung 110"' in dem Filmscharnier 12"' gesteckt ist. Die Spitze des Druckknopfs 13"' ist dabei mit einem gegenüber dem Durchmesser des restlichen Druckknopfes 13"' verbreiterten Kopf ausgebildet, der aus der elastisch ausgebildeten Öffnung 110'" in dem Filmscharnier 12"' heraussteht und dadurch die Position der Seitenwände 2"', 3"' zueinander zusätzlich verrastet.

Die in Fig.1-16 aufgeführten Ausführungsbeispiele zeigen beispielhaft die Vielfältigkeit des Anwendungsspektrums für Beschläge aus biologisch abbaubaren Kunststoffen. Die Beschläge sind bei Raumtemperatur stabil und widerstandsfähig gegenüber Feuchtigkeit und chemischen Reinigungsmitteln.

Sie zersetzen sich jedoch im Milieu des Komposthaufens innerhalb von 14 Wochen, vorzugsweise 8 Wochen in ihre Stoffwechselendprodukte. Je nach Ausführungsform kommen verschiedene Polymerzusammensatzungen für einen Beschlag in Betracht.

Ein für die Beschlags-, Möbelteil- und Möbelherstellung geeigneter biologisch abbaubarer Kunststoff weist dabei ein Zug-E-Modul von mindestens 1000 MPa, vorzugsweise mindestens 2500 MPa, beispielsweise 3500 MPa und ein Biege-E-Modul von mindestens 1000 MPa, vorzugsweise mindestens 2000 MPa, beispielsweise 2500 Mpa auf. Weiterhin weisen die geeigneten biologisch abbaubaren Kunststoffe eine Glasübergangstemperatur bzw. Formbeständigkeit Vicat A größer 60 °C auf.

Dabei kann ggf. zur Materialverstärkung auch eine Faserverstärkung in Kraftrichtung erfolgen.

Der Beschlag kann insbesondere ein- oder mehrteilig als Scharnier, insbesondere Filmscharnier, Griff, Auszugsführung, Rastbeschlag, Verbindungsbeschlag, Schraube oder Dübel vorzugsweise für den Leichtbaueinsatz ausgebildet sein. Hierfür werden ein oder mehrere Formteile aus Kunststoff vorgesehen, die biologisch abbaubar sind.

Zudem kann der Beschlag ein Filmscharnier enthalten, das durch eine dünne Materialleiste gebildet ist, die zum Verschwenken biegbar ist. Das Filmscharnier kann zwei plattenförmige Abschnitte aufweisen, die über eine Leiste mit geringerem Querschnitt bzw. Dicke miteinander verbunden sind.

Auch andere Beschläge können eingesetzt werden, sofern ein Formteil aus einem biologisch abbaubaren Formteil eingesetzt wird.

Der erfindungsgemäße Beschlag kann durch Spritzgießen insbesondere durch Heißkanal-Spritzgießen, Kompaktspritzgießen, Mehrkomponenten-Spritzgießen, Monosandwich-Spritzgießen, Gegentakt-Spritzgießen, Spritzgießcompoundierung bei Verwendung von Compounds (Füllstoffverstärkung), Thermoplast-Spritzgießen, Naturfaser-Spritzgießen und Spritzprägen hergestellt werden.

Dabei sollte das Material bevorzugt homogen sein und zudem problemfrei dosierbar sein, damit alle Teile der Schmelze eine gute Fließfähigkeit aufweisen.

Es können beispielsweise compoundierte Holz-Kunststoff Verbundstoff-Pellets mit im Vergleich zu Extrusionsware geringem Holzgehalt.

Die Polymerwerkstoffe werden in einem Plastifizierer aufgeschmolzen und in einem diskontinuierlichen Verfahren unter hohen Drücken bis zu 2400 bar "schussweise" in eine Metallform gespritzt. Somit kann ein Mehrfachwerkzeug ausgeformt werden, welches im Anschluss in Einzelsegmente ausgeteilt wird. Dabei treten lediglich geringe Entmischungseffekte bei einer homogenen Polymermischung auf.

Die Holzfaserkunststoff-Masse (WPC - Wood-Plastic-Composites) erstarrt beim Abkühlen. Der Spritzguss kann im "Injection Moulding Compounder" auch in einem Arbeitsschritt erfolgen. Aufgrund der Holzpartikelgeometrie und der geringen Schlagzähigkeit sind die Wandstärken im Spritzguss dicker ausgelegt als bei reinen Kunststoffgranulaten. Vorteilhaft ist die wesentlich höhere Wärmeformbeständigkeit, die der Masse bei höheren Temperaturen Steifigkeit verleiht. Holzfaserkunststoff-Formteile können daher bei höheren Temperaturen entformt werden.

Die Holz-Kunststoff-Verbundstoffe können beispielsweise auf PLA-Basis mit Holzfaserverstärkung hergestellt werden.

Alternativ oder zusätzlich kann bei besonders belasteten Bereichen des Beschlags oder der Beschlag selber mit Naturfasern versehen sein, welche in der Hauptbelastungsrichtung in das Material eingearbeitet sind und als eine Armierung wirken.

Alternativ oder zusätzlich kann als Armierung, beispielsweise im biegbaren Bereich eines Filmscharniers ein biologisch abbaubares Naturfaser-Polymer-Hybridmaterial eingesetzt werden, in welchem die Naturfasern in Kraftrichtung ausgebildet sind und das Polymer eine Bündelung der Naturfasern bewirkt. Diese auch als naturfaserverstärkte Kunststoffe (NFK) bekannten Werkstoffe haben viele Vorteile, sie sind bis zu 30 Prozent leichter als herkömmliche Faserverbunde, splittern nicht und brechen ohne scharfe Kanten. Das Material ist auch bei geringer Dichte fest und steif und ist daher als Leichtbauwerkstoff geeignet. Die Geometrie der Naturfaser im Granulat und im späteren Endprodukt ist von besonderer Bedeutung. Der relevante Parameter ist das Verhältnis der Länge zum Durchmesser der Faser, bevorzugt sollte er über 50:1 liegen.

Neben Holzfasern, sind weitere Zuschlagstoffe zu dem Polymermaterial bei Naturfaserverbundwerkstoffen wie beispielsweise Kenaf, Jute, Flachs, Cellulose, Sisal, Abaca, Ramie oder Lignin (fein gemahlen um eine Verarbeitung zu ermöglichen) einsetzbar. Naturfasern werden nach ihrer Herkunft unterschieden. Die DIN 60001-1: 2001-05 definiert Naturfasern wie folgt "natürliche, linienförmige Gebilde, die sich textil verarbeiten lassen. Sie können von Pflanzenteilen gewonnen sein oder das Haarkleid von Tieren bilden oder von den Kokons der Seidenspinner gewonnen werden oder mineralischen, natürlichen Ursprungs sein". Pflanzenfasern können Samenfasern beispielsweise Baumwolle (CO), Fruchtwandfasern z.B. Kapok (KP), Bastfasern beispielsweise Flachs bzw. Leinen (LI), Hanf (HA), Jute (JU), Ramie (RA), Sunn (SN), Urena (JR), Rosella (JS) usw. oder Hartfasern beispielsweise Sisal (SI), Manilahanf (AS), Henequen (HE), Kokos (CC) und andere sein. Bei tierischen Fasern wird zwischen feinen und groben Tierhaaren, Wolle sowie Seide unterschieden. Asbest ist beispielsweise eine technische Naturfaser auf Mineralbasis.

Die Matrix von Naturfaserverbundwerkstoffen besteht für die erfindungsgemäße Verwendung bevorzugt aus nachwachsenden Rohstoffen neben PLA kommen beispielsweise auch pflanzliche Leime, Kleber oder Harze in Frage.

Ggf. können Zuschlagstoffe, beispielsweise CaCO₃ zugesetzt werden um die Härte des Polymers gezielt einzustellen. Weiterhin können Additive und Füllstoffe zugesetzt werden, um den Kunststoff steifer, farbig und/oder UV-beständiger zu machen. Verwendung finden hierzu beispielsweise Mineralien wie Talkum, anorganische Pigmente oder nachwachsende Rohstoffe wie Holzmehl und Holzfasern.

Dabei weist das Polymer beim Spritzgussverfahren geringe Fehlstellen auf, so dass es elastisch ist und somit leicht biegsam, z.B. zur Verwendung bei Filmscharnieren.

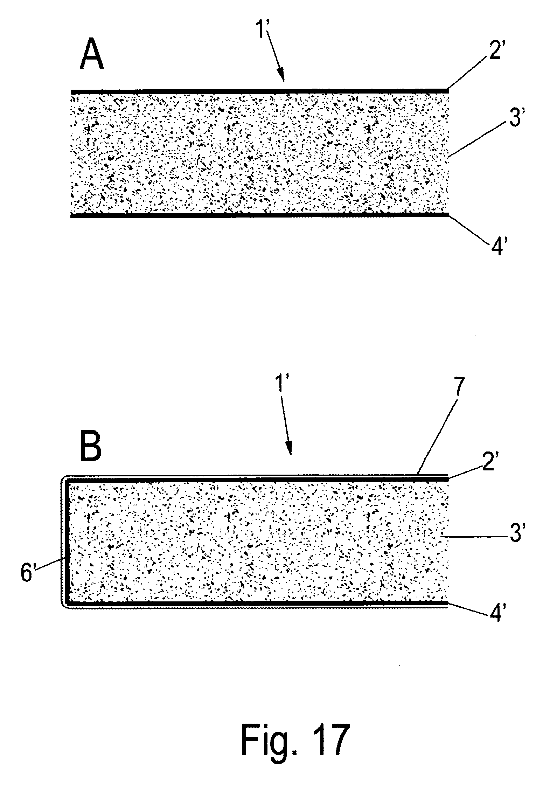

Fig. 17a zeigt eine Ausführungsform eines erfindungsgemäßen Möbelteils als Mehrschicht-Leichtbauplatte 1'. Sie zeigt eine geschäumte Mittelschicht 3' aus Kernmaterial. Fig. 17B zeigt darüber hinaus zwei Deckplatten 2', 4' aus Schichtmaterial, welche mittels eines Klebstoffs adhäsiv mit dem Kernmaterial verbunden ist.

Fig. 17b zeigt eine baugleiche Mehrschicht-Leichtbauplatte 1', welche durch eine Kantenleiste 6' und eine Dekorfolie 7 aus einem hydrophoben, biologisch abbaubaren Kunststoff ergänzt wurde.

Die beschriebenen Materialien eignen sich zur Herstellung von Beschlägen, Möbelteilen und Möbeln.

### Bezugszeichenliste

- Leichtbauplatte: 1
- Leichtbauplatte: 1'
- Deckplatte: 2
- Deckplatte: 2'
- Mittelschicht: 3
- Mittelschicht: 3'
- Deckplatte: 4
- Deckplatte: 4'
- Stirnseite: 6
- Kantenleiste: 6'
- Dekorfolie: 7
- Beschlagsteil: 39
- Beschlag: 40
- Rohrelement: 41
- Vorsprung: 42
- Länglicher Gehäusetopf: 43
- Klebemittelkammer: 44
- Wandabschnitt: 45

- Flansch: 49
- Dübelkörper: 50
- Zylindrischer Teil: 51
- Mündung: 52
- Zuführöffnung: 53
- Kanal: 54
- Erste Mündung: 55
- Abzweigung: 56
- Hervorstehende Spirale: 59
- Verbindungssystem: 10'
- Einsatz: 11'
- Einsatz: 12'
- Verbindungselement: 13'

- Aufnahme: 26'
- Rastnocke: 32'
- Rastnocke: 34'
- Schlitz: 33'
- Schlitz: 35'
- Verbindungselement: 40'
- Erster Scharnierteil: 41'
- Gelenkelement: 42'
- Scharniertopf: 43'
- Platte: 44'
- Injektionskanal: 45'
- Klebefläche: 46'
- Ring: 47'
- Schrankaufhänger: 1''
- Gehäuse: 2"
- Tragteil 1: 3''
- Aufnahme: 4"
- Aufnahmekammer: 5"
- Kanal: 6"
- Blende: 6a"

- Wälzkörperkäfig: 1"'
- Wälzkörperkäfig: 1""
- Seitenwand: 2'"
- Seitenwand: 3'"
- bistabiles Blattfederelement: 6'''
- Spalt: 7"'
- Filmscharnier: 8'"
- Flügel: 9'''
- Längskante: 10'''
- Längskante: 11''
- Filmscharnier: 12'''
- Druckknopf: 13'''
- Öffnung: 110'''

## Patentansprüche

1. Beschlag, insbesondere zur Montage an Möbeln, mit ein oder mehreren Formteilen, die zumindest teilweise aus Kunststoff hergestellt sind, **dadurch gekennzeichnet, dass** zumindest ein Formteil aus einem biologisch abbaubaren Kunststoff hergestellt ist.

2. Beschlag, nach Anspruch 1, **dadurch gekennzeichnet, dass** der biologisch abbaubare Kunststoff unter Kläranlagenbedingungen innerhalb von 14 Wochen, vorzugsweise innerhalb von 8 Wochen zu natürlich vorkommenden Stoffwechselendprodukten abgebaut ist.

3. Beschlag, nach Anspruch 1 oder 2, **dadurch gekennzeichnet, dass** das Formteil durch ein Spritzgießverfahren hergestellt ist.

4. Beschlag, nach einem der Ansprüche 1 bis 3, **dadurch gekennzeichnet, dass** der biologisch abbaubare Kunststoff einen Schmelzpunkt zwischen 50-190°C, vorzugsweise 80-160°C, aufweist.

5. Beschlag nach einem der vorhergehenden Ansprüche, **dadurch gekennzeichnet, dass** der Kunststoff ein Polyester-Derivat oder ein Salz eines Polyester-Derivats enthält.

6. Beschlag oder Scharnier nach Anspruch 5, **dadurch gekennzeichnet, dass** der Kunststoff ein Copolymer mehrerer Polyester-Derivate oder/und Salze von Polyester-Derivaten enthält.

7. Beschlag nach einem der vorhergehenden Ansprüche, **dadurch gekennzeichnet, dass** der Kunststoff ein Polyhydroxyalkanoat enthält.

8. Beschlag nach Anspruch 7, **dadurch gekennzeichnet, dass** der Kunststoff ein Polyhydroxybuttersäure-Derivat, ein Salz eines Polyhydroxybuttersäure-Derivats, ein Polymilchsäure-Derivat, ein Salz eines Polymilchsäure-Derivats, ein Polyhydroxyvaleriansäure-Derivat und/oder ein Salz eines Polyhydroxyvalerinsäure-Derivats enthält.

9. Beschlag, nach einem der vorhergehenden Ansprüche, **dadurch gekennzeichnet, dass** der biologisch abbaubare Kunststoff ein Copolymer aus einem Polyhydroxybuttersäure-Derivat und einem Polyhydroxyvaleriansäurederivat enthält.

10. Beschlag, nach einem der vorhergehenden Ansprüche, **dadurch gekennzeichnet, dass** in dem Beschlag mindestens ein Kanal zur Verteilung von Klebemittel ausgebildet ist.

11. Beschlag, nach einem der vorhergehenden Ansprüche, **dadurch gekennzeichnet, dass** der biologisch abbaubare Kunststoff ein Stärkewerkstoff oder Stärkeblend enthält.

12. Möbel, insbesondere mit Leichtbauplatten, welches mindestens einen Beschlag nach einem der vorhergehenden Ansprüche aufweist.

13. Möbel, nach Anspruch 12, **dadurch gekennzeichnet, dass** der mindestens eine Beschlag durch einen Klebstoff auf oder in dem Möbel fixiert ist.

14. Möbel, nach Anspruch 13, **dadurch gekennzeichnet, dass** der Klebstoff Casein und/oder Glutin enthält.

15. Möbel, nach einem der vorhergehenden Ansprüche, **dadurch gekennzeichnet, dass** das Möbel Leichtbauplatten aus einem biologisch abbaubaren Werkstoff enthält.

## Claims

1. Fitting, in particular for attachment onto furniture, with one or more moulded components which are at least partially made of plastic, **characterised in that** at least one moulded component is made from a biodegradable plastic.

2. Fitting according to Claim 1, **characterised in that** under clarification plant conditions the biodegradable plastic is degraded to naturally occurring metabolism end products within 14 weeks and preferably within 8 weeks.

3. Fitting according to Claims 1 or 2, **characterised in that** the moulded component is produced by an injection moulding process.

4. Fitting according to any of Claims 1 to 3, **characterised in that** the biodegradable plastic has a melting point between 50° and 190°, preferably between 80° and 160°.

5. Fitting according to any of the preceding claims, **characterised in that** the plastic contains a polyester derivative or a salt of a polyester derivative.

6. Fitting according to Claim 5, **characterised in that** the plastic contains a copolymer of a plurality of polyester derivatives and/or salts of polyester derivatives.

7. Fitting according to any of the preceding claims, **characterised in that** the plastic contains a polyhydroxyalkanoate.

8. Fitting according to Claim 7, **characterised in that** the plastic contains a polyhydroxybutyric acid derivative, a salt of a polyhydroxybutyric acid derivative, a polylactic acid derivative, a salt of a polylactic acid derivative, a polyhydroxyvaleric acid derivative and/or a salt of a polyhydroxyvaleric acid derivative.

9. Fitting according to any of the preceding claims, **characterised in that** the biodegradable plastic contains a copolymer of a polyhydroxybutyric acid derivative and a polyhydroxyvaleric acid derivative.

10. Fitting according to any of the preceding claims, **characterised in that** at least one duct for the distribution of adhesive is formed in the fitting.

11. Fitting according to any of the preceding claims, **characterised in that** the biodegradable plastic contains a starch material or starch blend.

12. Furniture item, in particular having lightweight panels, which comprises at least one fitting according to any of the preceding claims.

13. Furniture item according to Claim 12, **characterised in that** the at least one fitting is fixed onto or in the furniture item by means of an adhesive.

14. Furniture item according to Claim 13, **characterised in that** the adhesive contains casein and/or gluten.

15. Furniture item according to any of the preceding claims, **characterised in that** the furniture item comprises panels made from a biodegradable material.

## Revendications

1. Ferrure, en particulier destinée à être installée sur des meubles, comportant une ou plusieurs pièces moulées, qui sont fabriquées au moins en partie en matière plastique, **caractérisée en ce qu'**au moins une pièce moulée est fabriquée à partir d'une matière plastique biodégradable.

2. Ferrure selon la revendication 1, **caractérisée en ce que** la matière plastique biodégradable se dégrade sous certaines conditions dans une station d'épuration dans un délai de 14 semaines, de préférence dans un délai de 8 semaines, pour se transformer en produits décomposés apparaissant naturellement.

3. Ferrure selon la revendication 1 ou 2, **caractérisée en ce que** la pièce moulée est fabriquée grâce à un procédé de moulage par injection.

4. Ferrure selon l'une quelconque des revendications 1 à 3, **caractérisée en ce que** la matière plastique biodégradable présente un point de fusion compris entre 50 et 190°C, de préférence compris entre 80 et 160°C.

5. Ferrure selon l'une quelconque des revendications précédentes, **caractérisée en ce que** la matière plastique contient un dérivé de polyester ou un sel d'un dérivé de polyester.

6. Ferrure ou charnière selon la revendication 5, **caractérisée en ce que** la matière plastique contient un copolymère de plusieurs dérivés de polyester ou/et de sels de dérivés de polyester.

7. Ferrure selon l'une quelconque des revendications précédentes, **caractérisée en ce que** la matière plastique contient un polyhydroxyalkanoate.

8. Ferrure selon la revendication 7, **caractérisée en ce que** la matière plastique contient un dérivé d'acide polyhydroxybutyrique, un sel d'un dérivé d'acide polyhydroxybutyrique, un dérivé d'acide polylactique, un sel d'un dérivé d'acide polylactique, un dérivé d'acide polyhydroxyvalérique et/ou un sel d'un dérivé d'acide polyhydroxyvalérique.

9. Ferrure selon l'une quelconque des revendications précédentes, **caractérisée en ce que** la matière plastique biodégradable contient un copolymère constitué d'un dérivé d'acide polyhydroxybutyrique et d'un dérivé d'acide polyhydroxyvalérique.

10. Ferrure selon l'une quelconque des revendications précédentes, **caractérisée en ce qu'**au moins un canal est réalisé dans la ferrure aux fins de la répartition d'adhésif.

11. Ferrure selon l'une quelconque des revendications précédentes, **caractérisée en ce que** la matière plastique biodégradable contient une substance à base d'amidon ou un mélange d'amidon.

12. Meuble, en particulier doté de panneaux légers, lequel présente au moins une ferrure selon l'une quelconque des revendications précédentes.

13. Meuble selon la revendication 12, **caractérisé en ce que** la ferrure au moins au nombre d'une est fixée par un adhésif sur ou dans le meuble.

14. Meuble selon la revendication 13, **caractérisé en ce que** l'adhésif contient de la caséine et/ou de la colle d'os.

15. Meuble selon l'une quelconque des revendications précédentes, **caractérisé en ce que** le meuble contient des panneaux légers constitués d'une matière biodégradable.
